# EUROPEAN PATENT SPECIFICATION

(11) **EP 0 372 918 B1**
(45) Date of publication and mention of the grant of the patent: **17.03.1993**
(21) Application number: 89312694.6
(22) Date of filing: 06.12.1989
(51) Int. Cl.: C01B 33/025

(54) **Silicon powder and method for its production**
Siliziumpulver und Verfahren zu seiner Herstellung
Poudre de silicium et procédé de sa préparation

(30) Priority: 08.12.1988 NO 885453
(43) Date of publication of application: 13.06.1990
(73) Proprietor: ELKEM A/S, 0483 Oslo 4 (NO)
(72) Inventor: Forwald, Karl, N-4622 Kristiansand (NO); Sorli, Oyvind, Sewickley PA 15143 (US); Schüssler, Gunnar, N-3000 Drammen (NO)
(74) Representative: Rees, David Christopher

(56) References cited:
- EP-A- 0 007 536
- EP-A- 0 120 506
- EP-A- 0 135 980
- DE-A- 3 223 821
- US-A- 4 374 633
- POWDER METALLURGY vol. 31, no. 4, 1988, pages 259-266, London, GB; R.I.L. HOWELLS et al.: "Production of gas atomised metal powders and their major industrial uses"

## Description

The present invention relates to a new silicon powder product and to a continuous method for its production.

Silicon is mainly produced by carbothermal reduction in electric furnaces. Molten silicon tapped from the furnaces is usually cast in the form of rather large blocks, for example by casting in cast iron moulds. For a number of different applications silicon is used in powder form and for these applications the blocks or pieces of silicon have to be mechanically crushed and then ground to a preset particle size having the desired chemical analysis. This method has, however, a number of disadvantages and drawbacks. Thus, alloying elements which are added to the molten silicon and impurities contained in the molten silicon, show a strong tendency towards segregation during block casting and the grain size in the solid silicon will be large due to the slow cooling rate, which is unavoidable in block casting of silicon. During the mechanical crushing and grinding of block cast silicon, a non-homogeneous powder product will therefore be obtained due to segregation and large primary grain size, which for a number of applications, is a disadvantage.

By block casting of silicon, oxides, carbides, nitrides and carbonitrides will also be produced. These compounds are, even in minor amounts unwanted. The crushing and grinding processes also contaminate the silicon with iron, due to wear of the crushing and grinding equipment. Furthermore, during crushing and grinding of blocks of silicon, the fracture surfaces of the silicon particles will oxidise and the powder produced will thus have an unwanted oxide layer on the surface of each individual particle. Finally, the crushing and grinding processes constitute an environmental problem in the form of noise, dust and heat stress.

There has therefore been a need to provide a method for the continuous production of silicon powder directly from the molten silicon which is tapped from electrical smelting furnaces.

With reference to 'Powder Metallurgy', vol 31, no. 4, 1988 and EP-A- 120 506 a large number of methods are known for the production of metal powders in general, such as for example atomising by means of an inert gas, atomising by means of a liquid, atomising on a rapidly rotating disc, etc. These known methods for the production of metal powders are, however, batch processes where a certain amount of metal is melted and atomised, and for this reason they tend not to be economically viable; with these methods, it is not possible to produce silicon powder continuously directly from the molten metal tapped from a smelting furnace, without going through the route of a normal casting process and remelting. As far as the present Applicants are aware, a method for gas atomising of silicon is not known.

It is an object of the present invention to provide a silicon powder which does not show the above mentioned drawbacks of silicon powder made from block cast silicon and to provide a continuous method for the production of silicon powder.

According to a first aspect, the present invention relates to a silicon powder which is characterised in that the silicon powder is produced by gas atomising in an inert gas stream molten silicon, which silicon powder has a particle size between 0.1 and 1000 µm, a specific surface area between 0.001 and 1 m²/g and the following chemical composition in percent by weight:
- 0.1 - 1%: iron
- 0.01 - 1%: aluminium
- 0 - 8%: copper
- 0 - 1%: calcium
- 0 - 1%: zinc
- 0 - 1%: tin
- 0 - 0.5%: boron
- 0 - 0.5%: phosphorus
- 0 - 0.5%: sodium
- 0 - 0.5%: lithium
- 0 - 0.5%: potassium
- 0 - 0.5%: magnesium
- 0 - 0.5: strontium
- 0 - 0.5%: barium
- 0 - 0.5%: beryllium

the balance being silicon and less than 0.3% of impurities such as Ti, V, Cr, Mo, W and Zr.

According to a preferred embodiment the silicon powder has the following composition in percent by weight: 0.25 - 0.55% iron, 0.05 - 0.45% aluminium, 0.005 - 0.20% calcium, the balance being silicon except for normal impurities.

According to another preferred embodiment the silicon powder has the following composition in percent by weight: 0.25 - 0.55% iron, 0.05 - 0.45% aluminium, 0.005 - 0.20% calcium, 1 - 6% copper, the balance being silicon except for normal impurities.

The silicon powder according to the present invention is especially suited for use in the production of organosilanes where silicon powder is reacted with an alkyl- or aryl chloride, and for the production of chlorosilanes.

In the production of organosilanes, silicon powder is reacted with an alkyl- or arylchloride in the presence of a copper catalyst and promoters such as zinc and tin. It has been found that by using silicon powder according to the present invention, a considerably improved production rate is obtained during the silane production. A particular advantage in using the silicon powder according to the present invention in the production of organosilanes is that the copper catalyst and promoters such as zinc and tin can be present in the silicon powder itself.

The silicon powder according to the present invention can also advantageously be used in ceramic and refractory materials and for alloying with aluminium by injection of the silicon powder into aluminium melts.

According to another aspect, the present invention relates to a method for the continuous production of silicon powder, the method being characterised by the following steps:
a) continuously producing silicon in, e.g. an electric smelting furnace;
b) refining and alloying of the molten silicon, e.g. in a metal treatment vessel;
c) optionally continuously supplying the molten silicon, e.g. from the metal treatment vessel to a holding furnace;
d) continuously supplying the molten silicon from the holding furnace to a closed atomising apparatus, wherein the molten silicon is atomised by means of an inert gas supplied, e.g. from a pressure vessel or from a compressor unit;
e) continuously removing the atomised silicon powder and inert gas from the atomising apparatus;
f) separating the atomised silicon powder and inert gas in a solid/gas separator;
g) optionally screening the silicon powder to preset particle size fractions;
h) optionally supplying different particle size fractions of silicon powder to closed production silos;
i) filtering the inert gas from step f) to remove any remaining solid particles from the inert gas; and
j) cooling and compressing the inert gas from the step i) and recycling of the compressed inert gas to the pressure vessel or directly to the atomising apparatus.

According to a preferred embodiment of the method, chemical compounds for modifying the surface of the atomised silicon particles are injected at the outlet end of the atomising apparatus, between the atomising apparatus and the solid/gas separator, or inside the solid/gas separator.

By the method according to the present invention, silicon is treated in a closed system and in an inert atmosphere, from when molten silicon is supplied to the atomising unit in step d) until the screened silicon powder has been supplied to the product silos. The possibility of supplying impurities to the silicon powder is thus effectively eliminated.

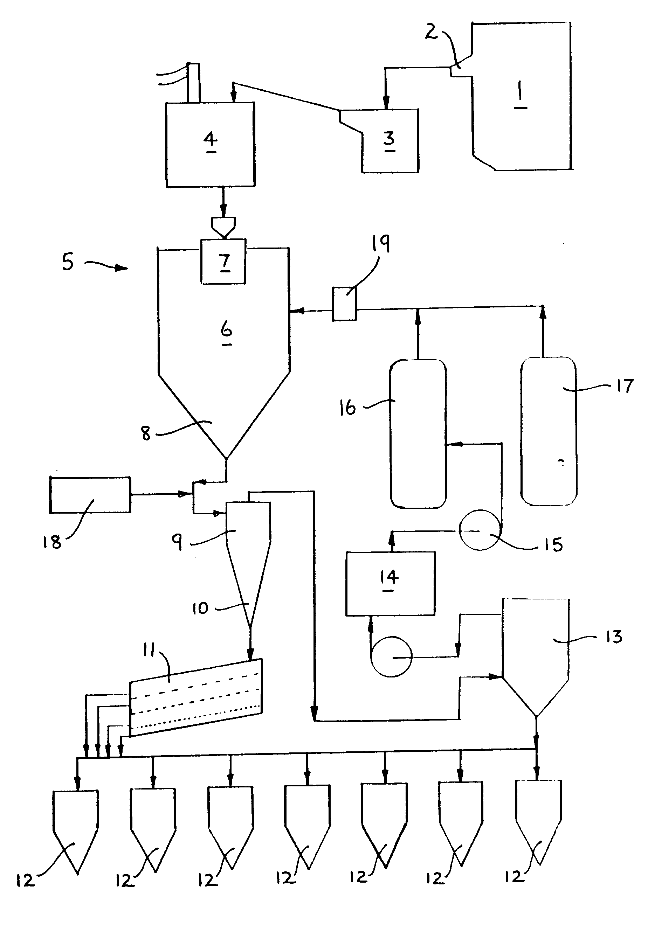

The method according to the present invention may be carried into practice in various ways and some embodiments will now be described by way of example with reference to the accompanying drawings, in which the single figure is a schematic view of the method according to the present invention.

The figure shows an electric smelting furnace 1 for carbothermal production of silicon from a silicon dioxide source and carbonaceous reduction material. Molten silicon is continuously tapped from the smelting furnace 1 at 2 and is transferred to a treatment vessel 3 in which the silicon is refined and alloyed in a conventional manner. Thereafter, the treated molten silicon is transferred to a holding furnace 4. From the holding furnace 4 a continuous and constant or substantially constant amount of silicon is supplied to an atomising apparatus 5.

The atomising apparatus 5 comprises a closed tank 6 in the upper part of which there is an atomising unit 7 having a plurality of nozzles for supply of inert gas which breaks up the continuous flow of silicon into small molten droplets which solidify during free fall down through the tank 6. In the atomising apparatus 5, the silicon solidifies in the course of a few seconds. This gives very homogeneous silicon particles without segregation and, due to the inert atmosphere, oxides, carbides, nitrides or carbonitrides are not formed in the particles. A clean and homogeneous powder is thereby obtained.

The silicon powder is collected in the bottom 8 of the tank 6. From the bottom 8 of the tank 6, the silicon powder and inert gas are supplied to an apparatus 9 for separation of the powder and inert gas. The apparatus 9 is preferably a cyclone. From the bottom 10 of the cyclone 9, silicon powder is continuously supplied to a closed screening unit 11 for screening the powder into different size fractions. The different size fractions of silicon powder are thereafter transported in a closed system to product silos 12 for the silicon powder.

As will be evident from the above, the silicon powder is transported in a closed system having an inert atmosphere from where the powder is formed in the atomising apparatus 5 up to the point where the powder is supplied to the product silos 12. Surface oxidation of the individual particles will therefore not take place.

From the apparatus 9 for separating the silicon powder and inert gas, the inert gas is directed to a filter 13, preferably a bag filter, where any remaining silicon particles are removed and transported to one of the product silos 12. The cleaned inert gas is piped to a cooler 14 for cooling the gas before it is compressed in a compressor 15 and supplied to a pressure tank 16 for the inert gas. From the pressure tank 16, the inert gas is recirculated to the nozzles in the atomising unit 7.

Before start-up of the atomising process, it is necessary to remove all oxygen-containing gas from the closed system. For this purpose a second pressure tank 17 for inert gas is provided. In addition, after 13, there is a bleed valve (not shown) for bleeding out the gas used to remove the oxygen-containing gases before start-up. The pressure tank 17 is also used to supply additional amounts of inert gas to compensate for any inert gas which may be lost during the atomising process to the screening unit and to the product silos. This loss is, however, very low and normally less than 1% of the gas which is supplied to the atomising unit 7.

Between the bottom 8 of the atomising tank 6 and the apparatus 9 for separating silicon powder and inert gas, there will preferably be means 18 for the addition of compounds for modifying the surface of the silicon powder particles.

In order to regulate the amount of inert gas supplied to the atomising nozzles, in relation to the amount of molten silicon supplied to the atomising apparatus 5, there is a control unit (not shown) for automatic regulation of the gas flow rate.

The following non-limiting examples illustrate the advantages obtained by using silicon powder according to the present invention in the production of organosilanes by the reaction of silicon with methyl chloride.

### EXAMPLE 1

In a stirred bed reactor having a diameter of 30 mm and equipped with a spiral stirrer, the following tests were carried out.

In all tests, the same amount of silicon or copper alloyed silicon was used. The particle size of the silicon was between 70 and 160 µm. Methyl chloride at a pressure of 2 bar was supplied to the bottom of the reactor. The amount of methyl chloride supplied was kept constant and was in all tests about 1.5 litre/hour at 2 bar. After preheating and initiation of the reaction, a stationary testphase or steady state was established at 300°C. Under these conditions the produced amount of silane produced per unit time was measured. The results given are mean values of four tests at constant conditions of 2 bar, 1.5 litre/hour methyl chloride and 300°C. The contact mass supplied to the reactor comprised 40 grams silicon, 3.2 grams copper catalyst and 0.05g ZnO. The mass was homogenised before it was added to the reactor.

Tests A and B were run with silicon powder produced in a conventional way by crushing and grinding. Test C was run with silicon powder produced in accordance with the present invention.

The chemical compositions of the silicon used in tests A, B and C included metal components as follows:

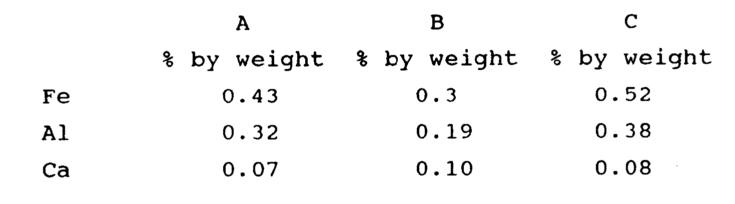

The following production rates of silanes were obtained in the three tests:
- Test A:: 5.7 gram/hour
- Test B:: 5.2 gram/hour
- Test C:: 8.3 gram/hour

The results show that by using the atomised silicon powder according to the present invention, an increase in the production rate of 45% and 56% were achieved over the conventional silicon powders.

### EXAMPLE 2

To the same reactor as described in Example 1 and under the same conditions (2 bar, 1.5 litre/hour methyl chloride and 300°C, atomised silicon powder according to the present invention was supplied having the following chemical composition in percent by weight:
Fe: 0.34% Al: 0.40% Cu: 5.75% Zn: 0.14% Ca: 0.10%
the balance being silicon except for impurities. The production rates of silanes in two test runs were measured and found to be 8.13 gram/hour and 9.9 grams/hour, showing a significant increase in production rate compared to the use of conventional crushed and ground silicon in tests A and B in Example 1.

## Claims

1. Silicon powder, characterised in that the silicon powder is produced by gas atomisation of molten silicon, in an inert gas stream the silicon powder having a particle size between 0.1 and 1000 µm, a specific surface area between 0.001 and 1 m²/g, and the following chemical composition in percent by weight:
0.1 - 1% iron and
0.01 - 1% aluminium, and optionally:
up to 8% copper,
up to 1% calcium,
up to 1% zinc,
up to 1% tin,
up to 0.5% boron,
up to 0.5% phosphorus,
up to 0.5% sodium,
up to 0.5% lithium,
up to 0.5% potassium,
up to 0.5% magnesium,
up to 0.5% strontium,
up to 0.5% barium and
up to 0.5% beryllium
the balance being silicon and less than 0.3% of impurities such as Ti, V, Cr, Mo, W and Zr.

2. Silicon powder as claimed in Claim 1, characterised by the following composition in percent by percent by weight: 0.25 - 0.55% iron, 0.05 - 0.45% aluminium, 0.005 - 0.20% calcium, the balance being silicon except for normal impurities.

3. Silicon powder as claimed in Claim 1, characterised by the following composition in percent by weight: 0.25 - 0.55% iron, 0.05 - 0.45% aluminium, 0.005 - 0.20% calcium, 1 - 6% copper, the balance being silicon except for normal impurities.

4. A method for continuous production of silicon powder, characterised by the following steps: continuously producing silicon in a smelting furnace ; refining and alloying of the molten silicon ; optionally continuously supplying the molten silicon to a holding furnace ; continuously supplying the molten silicon to a closed atomising apparatus in which the molten silicon is atomised by means of an inert gas; continuously removing the atomised silicon powder from the atomising apparatus; separating the atomised silicon powder and inert gas in a solid/gas separator ; optionally screening the silicon powder into preset particle size fractions; and supplying the different particle size fractions to closed silos ; filtering (13) the inert gas from the separation step to remove any remaining solid particles; cooling and compressing the filtered inert gas; and recycling the compressed inert gas to a pressure vessel or directly to the atomising apparatus.

5. A method as claimed in Claim 4, characterised in that chemical compounds for modifying the surface of the atomised silicon particles are injected at the outlet end of the atomising apparatus, between the atomising apparatus and the solid/gas separator (9), or inside the solid/gas separator.

6. A method as claimed in Claim 4 or Claim 5, characterised in that the smelting is carried out in an electric smelting furnace.

7. A method as claimed in any of Claims 4 to 6, characterised in that the refining and alloying is carried out in a metal treatment vessel.

8. A method as claimed in any of Claims 4 to 7, characterised in that the inert gas is supplied to the atomising apparatus from a pressure vessel or a compressor unit (15).

## Patentansprüche

1. Siliciumpulver, dadurch gekennzeichnet, daß es durch Gaszerstäubung von geschmolzenem Silicium in einem Inertgasstrom hergestellt ist und eine Partikelgröße zwischen 0,1 und 1000 µm, eine spezifische Oberfläche zwischen 0,001 und 1 m²/g und folgende chemische Zusammensetzung in Gew.% aufweist:
0,1 - 1 % Eisen und
0,01 - 1 % Aluminium und wahlweise:
bis zu 8 % Kupfer,
bis zu 1 % Calcium,
bis zu 1 % Zink,
bis zu 1 % Zinn,
bis zu 0,5 % Bor,
bis zu 0,5 % Phosphor,
bis zu 0,5 % Natrium,
bis zu 0,5 % Lithium,
bis zu 0,5 % Kalium,
bis zu 0,5 % Magnesium,
bis zu 0,5 % Strontium,
bis zu 0,5 % Barium und
bis zu 0,5 % Beryllium,
wobei der Rest aus Silicium und aus weniger als 0,3 % an Verunreinigungen wie Ti, V, Cr, Mo, W und Zr besteht.

2. Siliciumpulver nach Anspruch 1, gekennzeichnet durch folgende Zusammensetzung in Gew.%: 0,25 - 0,55 % Eisen, 0.05 - 0.45 % Aluminium, 0,005 - 0,20 % Calcium, wobei der Rest aus Silicium und den üblichen Verunreinigungen besteht.

3. Siliciumpulver nach Anspruch 1, gekennzeichnet durch folgende Zusammensetzung in Gew.%: 0,25 - 0,55 % Eisen, 0,05 - 0,45 % Aluminium, 0,005 - 0,20 % Calcium, 1 - 6 % Kupfer, wobei der Rest aus Silicium und den üblichen Verunreinigungen besteht.

4. Verfahren zur kontinuierlichen Herstellung von Siliciumpulver, gekennzeichnet durch folgende Schritte:
- kontinuierliche Erzeugung von Silicium in einem Schmelzofen;
- Raffinieren und Legieren des geschmolzenen Siliciums;
- wahlweise kontinuierliche Überführung des geschmolzenen Siliciums in einen Warmhalteofen;
- kontinuierliche Überführung des geschmolzenen Siliciums in einen geschlossenen Zerstäuber, in dem das geschmolzene Silicium mittels eines Inertgases zerstäubt wird;
- kontinuierliches Entfernen des Pulvers des zerstäubten Siliciums aus dem Zerstäuber;
- Abtrennen des Pulvers des zerstäubten Siliciums und des Inertgases voneinander in einem Feststoff/Gas-Separator;
- wahlweise Sieben des Siliciumpulvers in vorbestimmte Partikelgröße-Fraktionen und
- Überführung der verschiedenen Partikelgröße-Fraktionen in geschlossene Vorratsbehälter;
- Filtrieren des aus dem Separationsschritt stammenden Inertgases zu dessen Befreiung von sämtlichen Feststoffpartikeln;
- Kühlen und Komprimieren des gefilterten Inertgases und
- Rückführung des komprimierten Inertgases in ein Druckgefäß oder unmittelbar in den Zerstäuber.

5. Verfahren nach Anspruch 4, dadurch gekennzeichnet, daß am Auslaßende des Zerstäubers, zwischen dem Zerstäuber und dem Feststoff/Gas-Separator, oder in den Feststoff/Gas-Separator chemische Verbindungen zur Modifizierung der Oberfläche der Partikeln des zerstäubten Siliciums injiziert werden.

6. Verfahren nach Anspruch 4 oder 5, dadurch gekennzeichnet, daß das Schmelzen in einem elektrischen Schmelzofen ausgeführt wird.

7. Verfahren nach einem der Ansprüche 4 bis 6, dadurch gekennzeichnet, daß das Raffinieren und Legieren in einem metallischen Behandlungsgefäß ausgeführt werden.

8. Verfahren nach einem der Ansprüche 4 bis 7, dadurch gekennzeichnet, daß das Inertgas dem Zerstäuber aus einem Druckgefäß oder von einem Kompressor zugeführt wird.

## Revendications

1. Poudre de silicium caractérisée en ce que cette poudre de silicium est fabriquée par pulvérisation gazeuse de silicium en fusion dans un courant de gaz inerte, la poudre de silicium présentant une taille de particules comprise entre 0,1 et 1000 micromètres, une valeur de surface spécifique comprise entre 0,001 et 1 m²/g, et la composition chimique suivante en pourcentages de poids :
0,1 -1% fer et
0,01 -1% aluminium,et facultativement :
0 -8% cuivre,
0 -1% calcium,
0 -1% zinc,
0 -1% étain,
0 -0,5% bore,
0 -0,5% phosphore,
0 -0,5% sodium,
0 -0,5% lithium,
0 -0,5% potassium,
0 -0,5% magnésium,
0 -0,5% strontium,
0 -0,5% baryum et
0 -0,5% béryllium
le complément à 100% étant constitué par du silicium et moins de 0,3% d'impuretés telles que Ti, V, Cr, Mo, W et Zr.

2. Poudre de silicium selon la revendication 1, caractérisée en ce qu'elle présente la composition suivante en pourcentages de poids : 0,25-0,55% de fer, 0,05-0,45% d'aluminium, 0,005-0,20% de calcium, le complément à 100% étant constitué par du silicium sauf impuretés normales.

3. Poudre de silicium selon la revendication 1, caractérisée en ce qu'elle présente la composition suivante en pourcentages de poids : 0,25-0,55% de fer, 0,05-0,45% d'aluminium, 0,005-0,20% de calcium, 1-6% de cuivre, le complément à 100% étant constitué par du silicium sauf impuretés normales.

4. Procédé de fabrication de poudres de silicium en régime continu, procédé caractérisé en ce qu'il comprend les différentes étapes suivantes consistant à :
fabriquer du silicium en régime continu dans un four de fusion ; effectuer le raffinage et l'alliage du silicium en fusion ; fournir facultativement en régime continu le silicium fondu à un four de maintien ; fournir en régime continu le silicium en fusion à un appareil de pulvérisation fermé dans lequel le silicium en fusion est pulvérisé au moyen d'un gaz inerte ; retirer en régime continu la poudre de silicium pulvérisée de l'appareil de pulvérisation ; séparer la poudre de silicium pulvérisée du gaz inerte dans un séparateur solide/gaz ; passer facultativement au crible la poudre de silicium pour obtenir des fractions de particules de tailles prédéterminées ; fournir facultativement à des silos fermés les fractions de différentes tailles de particules de la poudre de silicium ; filtrer le gaz inerte provenant de l'étape de séparation pour en retirer toutes particules solides restantes ; refroidir et comprimer le gaz inerte filtré ; et recycler le gaz inerte comprimé vers un réservoir sous pression ou directement vers l'appareil de pulvérisation.

5. Procédé selon la revendication 4, caractérisé en ce que les composés chimiques destinés à modifier la surface des particules de silicium pulvérisées, sont injectés à l'extrémité de sortie de l'appareil de pulvérisation, entre cet appareil de pulvérisation et le séparateur solide/gaz, ou à l'intérieur du séparateur solide/gaz.

6. Procédé selon l'une quelconque des revendications 4 et 5, caractérisé en ce que l'opération de fusion est effectuée dans un four de fusion électrique.

7. Procédé selon l'une quelconque des revendications 4 à 6, caractérisé en ce que l'opération de raffinage et d'alliage est effectuée dans un récipient de traitement métallique.

8. Procédé selon l'une quelconque des revendications 4 à 7, caractérisé en ce que le gaz inerte est fourni à l'appareil de pulvérisation à partir d'un réservoir sous pression ou d'un bloc de compresseur.
